# EUROPEAN PATENT SPECIFICATION

(11) **EP 3 436 287 B1**
(45) Date of publication and mention of the grant of the patent: **25.12.2019**
(21) Application number: 17719017.0
(22) Date of filing: 29.03.2017
(51) Int. Cl.: B60C 1/00, C08K 3/00, C08K 5/00, C08K 5/06, C08K 5/103, C08K 5/521, C08K 3/04, C08K 3/36

(54) **A TIRE HAVING A TREAD COMPRISING A RUBBER COMPOSITION**
REIFEN MIT EINER LAUFFLÄCHE MIT EINER KAUTSCHUKZUSAMMENSETZUNG
PNEUMATIQUE À BANDE DE ROULEMENT COMPRENANT UNE COMPOSITION DE CAOUTCHOUC

(30) Priority: 31.03.2016 WO PCT/JP2016/061332
(43) Date of publication of application: 06.02.2019
(73) Proprietor: Compagnie Générale des Etablissements Michelin, 63000 Clermont-Ferrand (FR)
(72) Inventor: HARANO Aya, Tokyo 163-1073 (JP)
(74) Representative: Regimbeau
(86) International application number: PCT/JP2017/012836
(87) International publication number: WO 2017/170655

(56) References cited:
- US-A1- 2013 267 640

## Description

### Technical Field

The field of the present invention is that of rubber compositions used in particular as treads for tires for vehicles, particularly, for or snow tires, capable of rolling over ground surface covered with snow, while improving a resistance of the rubber composition to crack propagation which are notably associated with aging by thermal oxidation.

### Background Art

As is known, the snow tires classified in a category of use "snow", identified by an inscription the Alpine symbol ("3-peak-mountain with snowflake), marked on their sidewalls, mean tires whose tread patterns, tread compounds and/or structures are primarily designed to achieve, in snow conditions, a performance better than that of normal tires intended for normal on-road use with regard to their abilities to initiate, maintain or stop vehicle motion.

It is generally said that such snow tires have treads provided with smaller blocks having higher block height in parallel to position more incisions than that of the normal tires in order to soften rigidity of the treads, which makes it possible to better perform in snow condition. However, such characters may make crack risk higher, for example due to an acceleration of the crack propagation.

This is why tire designers are constantly seeking effective solutions which make it possible to improve the resistance of the rubber compositions against the crack propagation.

### Summary of Invention

### Technical Problem

Now, during their research, the inventors have discovered a novel and specific rubber composition for a tire tread, which makes it possible to achieve the above objective, i.e, to improve the resistance of the rubber composition(s) for the tire tread(s) against the crack propagation.

In the present description, unless expressly indicated otherwise, all the percentages (%) indicated are % by weight.

The abbreviation "phr" signifies parts by weight per hundred parts of elastomer or rubber (of the total of the elastomers if several elastomers are present).

Any interval of values denoted by the expression "between a and b" represents the range of values of greater than "a" and of less than "b" (the limits a and b excluded) Whereas any interval of values denoted by the expression "from a to b" means the range of values going from "a" to "b" (including the strict limits a and b).

In the present description, unless expressly indicated otherwise, each Tg (glass transition temperature) is measured in a known way by DSC (Differential Scanning Calorimetry) according to Standard ASTM D3418-08.

The expression "based on" should be understood in the present application to mean a composition comprising the mixture(s) and/or the product of the reaction of the various constituents used, some of the constituents being able or intended to react together, at least partly, during the various manufacturing phases of the composition, in particular during the vulcanization (curing).

### Solution to Problem

A first aspect of the invention is a tire having a tread which comprises a rubber composition based on at least a diene elastomer, a reinforcing filler, a plasticizing agent comprising a polar liquid plasticizer, and a diacetal represented by the formula (I): 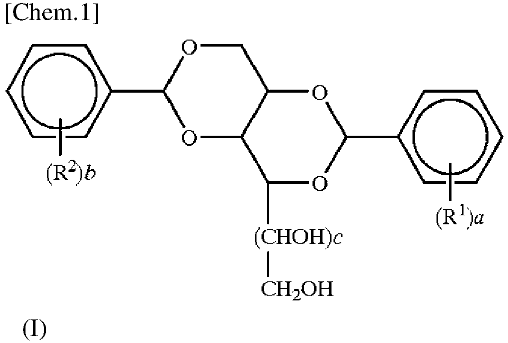 wherein R¹ and R² are the same or different and each represent a hydrogen atom, a C₁ to C₄ alkyl group, a C₁ to C₄ alkoxy group, a C₁ to C₄ alkoxycarbonyl group or a halogen atom; a and b are each an integer of 1 to 5; c is 0 or 1; when a is 2, the two R¹ groups taken together with the benzene ring to which they are linked may form a tetralin ring; and when b is 2, the two R² groups taken together with the benzene ring to which they are linked may form a tetralin ring.

### Advantageous Effects of Invention

The specific rubber composition of the tread of the tire according to the present invention gives the tires and their treads a better and improved resistance to crack propagation.

Further aspects of the present invention can be as follows.

A second aspect of the invention is the tire according to the first aspect, wherein the diene elastomer is selected from the group consisting of natural rubber, synthetic polyisoprenes, polybutadienes, butadiene copolymers, isoprene copolymers and the mixtures thereof.

A third aspect of the invention is the tire according to the first aspect or the second aspect, wherein the plasticizing agent comprises between 15 and 50 phr, preferably within a range from 20 to 40 phr, of the polar liquid plasticizer.

A fourth aspect of the invention is the tire according to any one of the first to the third aspects, wherein the polar liquid plasticizer is selected from the group consisting of vegetable oil(s), ether plasticizer(s), ester plasticizer(s), phosphate plasticizer(s), sulphonate plasticizer(s) and the mixtures thereof.

A fifth aspect of the invention is the tire according to the fourth aspect, wherein the polar liquid plasticizer is selected from the group consisting of vegetable oil(s), phosphate plasticizer(s) and the mixtures thereof.

A sixth aspect of the invention is the tire according to the fifth aspect, wherein the polar liquid plasticizer is selected from the group consisting of phosphate plasticizer(s) and the mixtures thereof.

A seventh aspect of the invention is the tire according to the sixth aspect, wherein the polar liquid plasticizer is Tris(2-ethylhexyl)phosphate.

An eighth aspect of the invention is the tire according to any one of the first to the seventh aspects, wherein the rubber composition is based on between 0.1 and 5 phr, preferably between 0.3 and 3 phr, more preferably between 0.5 and 1 phr, of the diacetal.

A ninth aspect of the invention is the tire according to any one of the first to the eighth aspects, wherein the diacetal is selected from the group consisting of 1,3:2,4-O-dibenzylidene-D-sorbitol, 1,3:2,4-bis-O-(p-methylbenzylidene)-D-sorbitol, 1,3:2,4-bis-O-(p-ethylbenzylidene)-D-sorbitol and 1,3:2,4-bis-O-(3,4-dimethylbenzylidene)-D-sorbitol and the mixtures thereof.

A tenth aspect of the invention is the tire according to the ninth aspect, wherein the diacetal is 1,3:2,4-O-dibenzylidene-D-sorbitol.

An eleventh aspect of the invention is the tire according to any one of the first to the tenth aspects, wherein the rubber composition is based on a gel of the polar liquid plasticizer with the diacetal.

A twelfth aspect of the invention is the tire according to the eleventh aspect, wherein the gel comprises between 0.5 and 5.0 parts, particularly between 1.0 and 4.0 parts, more particularly between 1.5 and 3.5 parts, by weight of the diacetal gel per 100 parts by weight of the polar liquid plasticizer forming the gel.

A thirteenth aspect of the invention is the tire according to the eleventh aspect or the twelfth aspect, wherein the gel is obtained by a process comprising at least the steps of:
- incorporating in the polar liquid plasticizer, into an agitated vessel, the diacetal at a temperature of less than 60°C, preferably less than 40°C, more preferably a room temperature;
- heating and stirring the combined mixture at a temperature of more than 100°C, preferably more than 110°C; and
- cooling the combine mixture at a temperature of less than 90°C, preferably less than 85°C.

A fourteenth aspect of the invention is the tire according to any one of the first to the tenth aspects, wherein the rubber composition is based on the polar liquid plasticizer gelated with the diacetal.

A fifteenth aspect of the invention is the tire according to any one of the first to the fourteenth aspects, wherein the reinforcing filler comprises more than 70 phr, notably between 70 and 160 phr, preferably more than 75 phr, notably between 75 and 150 phr, at least 80 phr, notably within a range from 80 to 140 phr, of the reinforcing inorganic filler.

A sixteenth aspect of the invention is the tire according to the fifteenth aspects, wherein the reinforcing inorganic filler comprises more than 50% and up to 100% of silica by weight of the reinforcing inorganic filler.

A seventeenth aspect of the invention is the tire according to the sixteenth aspect, wherein the reinforcing inorganic filler is silica.

An eighteenth aspect of the invention is the tire according to any one of the first to the seventeenth aspects, wherein the reinforcing filler comprises less than 20 phr, notably between 0.5 and 20 phr, preferably less than 15 phr, notably between 1 and 15 phr, more preferably at most 10 phr, within a range from 2 to 10 phr, of the carbon black.

A nineteenth aspect of the invention is the tire according to any one of the first to the eighteenth aspects, wherein the rubber composition is based on between 50 and 100 phr, preferably between 55 and 90 phr, more preferably within a range from 60 to 80 phr, of the plasticizing agent.

A twentieth aspect of the invention is the tire according to any one of the first to the nineteenth aspects, wherein the plasticizing agent further comprises a plasticizer selected from the group consisting of non-polar liquid plasticizer(s), hydrocarbon resin(s) and the mixtures thereof.

A twenty-first aspect of the invention is the tire according to any one of the first to the twentieth aspects, wherein the rubber composition is further based on between 0.2 and 10 phr, preferably between 0.3 and 6 phr, more preferably within a range from 0.5 to 4 phr, still more preferably within a range from 3 to 4 phr, of the metal acetylacetonate.

A twenty-second aspect of the invention is the tire according to any one of the first to the twenty-first aspects, wherein the tire is a snow tire.

A twenty-third aspect of the invention is a rubber composition, preferably for a tire, more preferably a tread of the tire, based on at least a diene elastomer, a reinforcing filler, a plasticizing agent comprising a polar liquid plasticizer, and a diacetal represented by the formula (I).

The tires of the invention are particularly intended to equip passenger motor vehicles, including 4×4 (four-wheel drive) vehicles and SUV (Sport Utility Vehicles) vehicles, and also industrial vehicles in particular chosen from vans and heavy duty vehicles (i.e., bus or heavy road transport vehicles (lorries, tractors, trailers)).

The invention and its advantages will be easily understood in the light of the description and implementation examples which follow.

### Description of Embodiments

The rubber composition of the tread of the tire according to the present invention has a first essential feature of being based on a diene elastomer.

It should be remembered that "diene" elastomer or rubber should be understood as meaning an elastomer resulting at least in part (i.e., a homopolymer or a copolymer) from diene monomers (monomers carrying two carbon-carbon double bonds which may or may not be conjugated).

Diene elastomers can be classified in a known way into two categories: those "essentially unsaturated" and those "essentially saturated". Butyl rubbers, such as, for example copolymers of dienes and of α-olefins of EPDM type, come within the category of essentially saturated diene elastomers, having a content of units of diene origin which is low or very low, always less than 15% (mol%). In contrast, essentially unsaturated diene elastomer is understood to mean a diene elastomer resulting at least in part from conjugated diene monomers, having a content of units of diene origin (conjugated dienes) which is greater than 15% (mol%). In the category of "essentially unsaturated" diene elastomers, "highly unsaturated" diene elastomer is understood to mean in particular a diene elastomer having a content of units of diene origin (conjugated dienes) which is greater than 50%.

It is preferable to use at least one diene elastomer of the highly unsaturated type, in particular a diene elastomer chosen from the group consisting of polybutadienes (BR), synthetic polyisoprenes (IR), natural rubber (NR), butadiene copolymers, isoprene copolymers and mixtures of these elastomers. Such copolymers are more preferably chosen from the group consisting of butadiene/styrene copolymers (SBR), in particular a solution SBR ("SSBR") and/or bearing at least one (i.e., one or more) SiOR function, R being hydrogen or hydrocarbon radical, as described in an application WO 2012/069565, isoprene/butadiene copolymers (BIR), isoprene/styrene copolymers (SIR), isoprene/butadiene/styrene copolymers (SBIR) and mixtures of such copolymers.

More preferably, the rubber composition of the tread of the tire according to the present invention is based on, as the diene elastomer, from 20 to 100 phr of a copolymer based on styrene and on butadiene, that is to say a copolymer of at least one styrene monomer and of at least one butadiene monomer; in other words, said copolymer based on styrene and on butadiene comprises, by definition, at least units derived from styrene and units derived from butadiene.

Still more preferably, the content of said copolymer in the rubber composition is within a range from 40 to 80 phr, particularly within a range from 50 to 70 phr.

Suitable butadiene monomers are in particular 1,3-butadiene, 2-methyl-1,3-butadiene, 2,3-di(C₁-C₅ alkyl)-1,3-butadienes such as for example 2,3-dimethyl-1,3-butadiene, 2,3-diethyl-1,3-butadiene, 2-methyl-3-ethyl-1,3-butadiene or 2-methyl-3-isopropyl-1,3-butadiene and an aryl-1,3-butadiene. Suitable styrene monomers are in particular styrene, methylstyrenes, para-(tert-butyl)styrene, methoxystyrenes and chlorostyrenes.

Said copolymer based on styrene and on butadiene may have any microstructure, which is a function of the polymerization conditions used, in particular of the presence or absence of a modifying and/or randomizing agent and of the amounts of modifying and/or randomizing agents used. It may be, for example, a block, statistical, sequential or microsequential copolymer, and may be prepared in dispersion or in solution; it may be coupled and/or star-branched or else functionalized with a coupling and/or star-branching or functionalizing agent.

Preferably, the copolymer based on styrene and on butadiene is chosen from the group consisting of styrene-butadiene (abbreviated to SBR) copolymers, styrene-butadiene-isoprene (abbreviated to SBIR) copolymers and the mixtures thereof.

More preferably, an SBR copolymer is used. Among the SBR copolymers, mention may especially be made of those having a styrene content of between 5% and 60% by weight and more particularly of between 20% and 50%, a content (mol%) of 1,2-bonds of the butadiene part of between 4% and 75% and a content (mol%) of trans-1,4-bonds of between 10% and 80%.

The Tg (glass transition temperature) of copolymer based on styrene and on butadiene is preferably from -90°C to 0°C, more preferably from -80°C to -20°C, still more preferably from -70°C to -40°C.

With the preferable copolymer based on styrene and on butadiene described above, at least another optional (or second) diene elastomer, optional and different from said copolymer (i.e. not comprising units derived from styrene and butadiene) may be combined, said second diene elastomer being present in a weight content which is consequently from 0 to 80 phr in case of that content of copolymer based on styrene and on butadiene is from 20 to 100 phr. That means content of the other diene elastomer(s) is 100 phr minus that of copolymer based on styrene and on butadiene.

The content of this optional second diene elastomer is preferably within a range from 20 to 60 phr, more preferably within a range from 30 to 50 phr.

This optional second diene elastomer is preferably chosen from the group consisting of natural rubbers (NR), synthetic polyisoprenes (IR), polybutadienes (BR), isoprene copolymers and blends of these elastomers. Such copolymers are more preferably chosen from the group consisting of isoprene-butadiene copolymers (BIR) and isoprene-styrene copolymers (SIR).

Especially suitable, among the latter, are polybutadiene (BR) homopolymers and in particular those having a content (mol%) of 1,2- units of between 4% and 80% or those having a content (mol%) of cis-1,4- units of greater than 80%; polyisoprene (IR) homopolymers; butadiene-isoprene copolymers (BIR) and especially those having an isoprene content of between 5% and 90% by weight and a Tg from -80°C to -40°C; and isoprene-styrene copolymers (SIR) and especially those having a styrene content of between 5% and 50% by weight and a Tg of between -25°C and -50°C.

According to one preferred embodiment, the second diene elastomer is an isoprene elastomer, more preferably natural rubber or a synthetic polyisoprene of cis-1,4- type; among these synthetic polyisoprenes, use is preferably made of polyisoprenes having a content (mol%) of cis-1,4- bonds of greater than 90%, more preferably still of greater than 98%.

According to a more preferred embodiment, the second diene elastomer is a polybutadiene, preferably a polybutadiene having a content (mol%) of cis-1,4 bonds of greater than 90%.

According to another more preferred embodiment, the second diene elastomer is a mixture(s) of polybutadiene with the following isoprene elastomer (natural rubber or synthetic polyisoprene).

As another essential feature, the rubber composition of the tread of the tire according to the invention is based on a reinforcing filler.

Use may be made of any type of reinforcing filler known for its capabilities of reinforcing a rubber composition which can be used for the manufacture of tires, for example an organic filler, such as carbon black, or a reinforcing inorganic filler, such as silica, with which a coupling agent is combined in a known way.

Such a reinforcing filler typically consists of nano particles, the mean size (by weight) of which is preferably less than 500 nm, more preferably between 20 and 200 nm, still more preferably preferably between 20 and 150 nm.

All carbon blacks, in particular blacks of the HAF, ISAF or SAF type, conventionally used in treads for tires ("tire-grade" blacks) are suitable as carbon blacks. Mention will more particularly be made, among the latter, of the reinforcing carbon blacks of the 100, 200 or 300 series (ASTM grades), such as, for example, the N115, N134, N234, N326, N330, N339, N347 or N375 blacks. The carbon blacks might, for example, be already incorporated in the isoprene elastomer in the form of a masterbatch (see, for example, Applications WO 97/36724 or WO 99/ 16600).

Mention may be made, as examples of organic fillers other than carbon blacks, of the functionalized polyvinyl organic fillers as described in Applications WO 2006/ 069792, WO 2006/069793, WO2008/003434 and WO2008/003435.

The term "reinforcing inorganic filler" should be understood here as meaning any inorganic or mineral filler, whatever its color and its origin (natural or synthetic), also known as "white filler" or sometimes "clear filler" in contrast to carbon black, capable of reinforcing by itself, without means other than an intermediate coupling agent, a rubber composition intended for the manufacture of tires, in other words capable of replacing, in its reinforcing role, a conventional tire-grade carbon black; such a filler is generally characterized, in a known way, by the presence of hydroxyl (-OH) groups at its surface.

Mineral fillers of the siliceous type, in particular silica (SiO₂), or of the aluminous type, in particular alumina (Al₂O₃), are suitable in particular as reinforcing inorganic fillers. The silica used can be any reinforcing silica known to a person skilled in the art, in particular any precipitated or pyrogenic silica exhibiting a BET surface and a CTAB specific surface both of less than 450 m²/g, preferably from 30 to 400 m²/g, in particular between 60 and 300 m²/g. Mention will be made, as highly dispersible ("HD precipitated silicas"), for example, of the Ultrasil 7000 and Ultrasil 7005 silicas from Evonik, the Zeosil 1165 MP, 1135 MP and 1115 MP silicas from Rhodia, the Hi-Sil EZ150G silica from PPG, the Zeopol 8715, 8745 and 8755 silicas from Huber. Mention may be made, as examples of reinforcing aluminas, of the "Baikalox A125" or "Baikalox CR125" aluminas from Bai'kowski, the "APA-100RDX" alumina from Condea, the "Aluminoxid C" alumina from Degussa or the "AKP-G015" alumina from Sumitomo Chemicals.

According to a preferred embodiment of the invention, the rubber composition of the tread of the tire is based on a reinforcing filler comprising more than 70 phr (in particular, between 70 and 160 phr) of a reinforcing inorganic filler. According to a more preferred embodiment of the invention, the reinforcing inorganic filler comprises more than 50% and up to 100% of silica by weight of the reinforcing inorganic filler, preferably the reinforcing inorganic filler is silica. Preferably, the content of the inorganic reinforcing filler is more than 75 phr (in particular, between 75 and 150 phr), more preferably at least 80 phr (in particular, within a range from 80 to 140 phr).

Preferably, the rubber composition of the tread of the tire is based on a reinforcing filler comprising less than 20 phr (in particular, between 0.5 and 20 phr) of carbon black. More preferably, the content of the carbon black is less than 15 phr (in particular, between 1 and 15 phr), still more preferably at most 10 phr (in particular, within a range from 2 to 10 phr). In the ranges indicated, the coloring properties (black pigmenting agent) and UV-stabilizing properties of the carbon blacks are benefited from, without, moreover, adversely affecting the typical performances provided by the reinforcing inorganic filler.

In order to couple the reinforcing inorganic filler to the diene elastomer, use is made, in a well-known way, of an at least bifunctional coupling agent (or bonding agent) intended to provide a satisfactory connection, of chemical and/or physical nature, between the reinforcing inorganic filler (surface of its particles) and the diene elastomer. Use is made, in particular, of bifunctional organosilanes or polyorganosiloxanes.

Use is made in particular of silane polysulphides, referred to as "symmetrical" or "asymmetrical" depending on their specific structure, as described, for example, in Applications WO 03/002648 (or US 2005/016651) and WO 03/002649 (or US 2005/016650). "Symmetrical" silane polysulphides corresponding to the following general formula (II):

- Z - A - Sx - A - Z (II),

in which:
- x is an integer from 2 to 8 (preferably from 2 to 5);
- A is a divalent hydrocarbon radical (preferably, C₁-C₁₈ alkylene groups or C₆-C₁₂ arylene groups, more particularly C₁-C₁₀, in particular C₁-C₄, alkylenes, especially propylene);
- Z corresponds to one of the formulae (III): 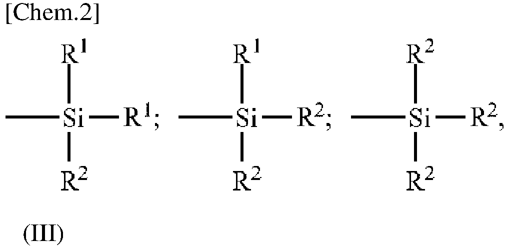 in which:
   - the R¹ radicals, which are unsubstituted or substituted and identical to or different from one another, represent a C₁-C₁₈ alkyl, C₅-C₁₈ cycloalkyl or C₆-C₁₈ aryl group (preferably, C₁-C₆ alkyl, cyclohexyl or phenyl groups, in particular C₁-C₄ alkyl groups, more particularly methyl and/or ethyl);
   - the R² radicals, which are unsubstituted or substituted and identical to or different from one another, represent a C₁-C₁₈ alkoxyl or C₅-C₁₈ cycloalkoxyl group (preferably a group chosen from C₁-C₈ alkoxyls and C₅-C₈ cycloalkoxyls, more preferably still a group chosen from C₁-C₄ alkoxyls, in particular methoxyl and ethoxyl), are suitable in particular, without the above definition being limiting. Mention will more particularly be made, as examples of silane polysulphides, of bis((C₁-C₄)alkoxyl(C₁-C₄)alkylsilyl(C ₁-C₄)alkyl)polysulphides (in particular disulphides, trisulphides or tetrasulphides), such as, for example, bis(3-trimethoxysilylpropyl) or bis(3-triethoxysilylpropyl) polysulphides. Use is in particular made, among these compounds, of bis(3-triethoxysilylpropyl) tetrasulphide, abbreviated to TESPT, of formula [(C₂H₅O)₃ Si(CH₂)3S₂]₂, or bis(triethoxysilylpropyl)disulphide, abbreviated to TESPD, of formula [(C₂HSO)₃Si(CH₂)₃S]₂. Mention will also be made, as preferred examples, of bis(mono(C₁-C₄)alkoxyldi(C₁-C₄)alkylsilylpropyl) polysulphides (in particular disulphides, trisulphides or tetrasulphides), more particularly bis(monoethoxydimethylsilylpropyl) tetrasulphide, as described in Patent Application WO 02/083782 (or US 7 217 751).

Mention will in particular be made, as coupling agent other than alkoxysilane polysulphide, of bifunctional POSs (polyorganosiloxanes) or of hydroxysilane polysulphides (R² = OH in the above formula (I)), such as described in Patent Applications WO 02/30939 (or US 6 774 255) and WO 02/31041 (or US 2004/051210), or of silanes or POSs carrying azodicarbonyl functional groups, such as described, for example, in Patent Applications WO 2006/125532, WO 2006/125533 and WO 2006/125534.

Mention will be made, as examples of other silane sulphides, for example, of silanes bearing at least one thiol (SH) function (referred to as mercaptosilanes) and/or at least one masked thiol function, such as described, for example, in patents or patent applications U.S. Pat. No. 6849754, WO 99/09036, WO 2006/023815 and WO 2007/098080.

Of course, use might also be made of mixtures of the coupling agents described above, as described in particular in the abovementioned Application WO 2006/125534.

In the rubber compositions of the tread of the tire according to the present invention, the content of coupling agent is preferably between 2 and 20 phr, more preferably between 3 and 15 phr.

The rubber compositions may be also based on coupling activators when a coupling agent is used, agents for covering the reinforcing inorganic filler when a reinforcing inorganic filler is used, or more generally processing aids capable, in a known manner, by virtue of an improvement in the dispersion of the filler in the rubber matrix and of a lowering of the viscosity of the compositions, of improving their ability to be processed in the uncured state. These covering agents are well known (see for example patent applications WO 2006/125533, WO 2007/017060 and WO 2007/003408), mention will be made, for example, of hydroxysilanes or hydrolysable silanes, such as hydroxysilanes (see for example WO 2009/062733), alkylalkoxysilanes, in particular alkyltriethoxysilanes such as for example 1-octyltriethoxysilane, polyols (for example diols or triols), polyethers (for example polyethylene glycols), primary, secondary or tertiary amines (for example trialkanolamines), hydroxylated or hydrolysable polyorganosiloxanes (for example α,ω-dihydroxypolyorganosilanes (in particular α,ω-dihydroxypolydimethylsiloxanes) (see for example EP 0 784 072) and fatty acids such as for example stearic acid.

The rubber composition of the tread of the tire according to the invention has an essential characteristic of being based on a plasticizing agent which comprises a polar liquid plasticizer.

According to a preferred embodiment of the invention, the rubber composition of the tread of the tire is based on between 50 and 100 phr of the plasticizing agent.

Below the indicated minimum of the total content of the plasticizing agent, the targeted technical effect may prove insufficient, whereas above the maximum of the total content of the plasticizing agent, the tack of the rubber compositions in the uncured state, with respect to the rubber compounding tools, may, in certain cases, become unacceptable from an industrial viewpoint. For the these reasons, the total content of the plasticizing agent is preferably between 55 and 90 phr, more preferably within a range from 60 to 80 phr.

According to a preferred embodiment of the invention, the plasticizing agent comprises between 10 and 60 phr of the liquid polar plasticizer.

The role of the liquid polar plasticizer is to enhance an affinity of the diacetal for the rubber composition and to soften the matrix by diluting the elastomer and the reinforcing filler. The content of the liquid polar plasticizer is preferably between 15 and 50 phr, more preferably within a range from 20 to 40 phr.

The expression "liquid plasticizer" is understood, in a known manner, to mean a plasticizer that is liquid at 20°C (under atmospheric pressure), referred to as a "low Tg plasticizer", i.e. which has, by definition, a Tg of below -20°C, preferably of below - 40°C, more preferably of below -60°C, still more preferably of below -80°C. Liquid plasticizers, which are preferably non-aromatic or very weakly aromatic, may be split into two categories: polar plasticizer(s) and non-polar plasticizer(s).

Among the non-polar liquid plasticizer(s), mention may be made of naphthenic oil(s), especially hydrogenated naphthenic oil(s), paraffinic oil(s), MES (mild extract solvate) oil(s), HPD (hydrogenated paraffinic distillation) oil(s) or TDAE (treated distillate aromatic extract) oil(s) and the mixtures thereof.

According to the invention, the polar liquid plasticizer(s) is preferably selected from the group consisting of vegetable oil(s), ether plasticizer(s), ester plasticizer(s), phosphate plasticizer(s), sulphonate plasticizer(s) and the mixtures thereof. Preferably, the polar liquid plasticizer is selected from the group consisting of vegetable oil(s), phosphate plasticizer(s) and the mixtures thereof. Among the vegetable oil(s), oleic sunflower oil(s) are preferred. More preferably, the polar liquid plasticizer is selected from the group consisting of phosphate plasticizer(s) and the mixtures thereof. The phosphate plasticizer(s) has a molecular structure comparatively exhibiting high polarity within a range not to seriously affect the curing time of the tires, and the molecular structure may effectively enhance the affinity of the diacetal for the rubber composition.

Mention may be made, as the liquid phosphate plasticizers for example, of those that contain between 12 and 30 carbon atoms, for example trialkyl phosphate having between 12 and 30 carbon atoms. The number of carbon atoms of trialkyl phosphate should be taken to mean the total number of carbon atoms of three alkyl groups. The three alkyl groups of trialkyl phosphate may be the same or different each other. The term "alkyl" used herein refers to a straight or branched alkyl group, which may contain a hetero atom such as an oxygen atom in its chain, or which may be substituted with a halogen atom such as fluorine, chlorine, bromine or iodine. The trialkyl phosphate may have one or two phenyl groups of instead of alkyl groups.

According to a preferred embodiment of the invention, the liquid phosphate plasticizer is preferably trialkyl phosphate having between 12 and 30 carbon atoms.

Mention may be made, as examples of the trialkyl phosphate, of an oil selected from the group consisting of trimethyl phosphate, triethyl phosphate, tributyl phosphate, trioctyl phosphate (especially, tris(2-ethylhexyl) phosphate), tris(2-butoxyethyl) phosphate, tris(2-chloroethyl) phosphate, 2-ethylhexyl diphenyl phosphate, and the mixtures thereof.

According to a more preferred embodiment of the invention, the liquid phosphate plasticizer is tris(2-ethylhexyl) phosphate. The liquid phosphate plasticizer is commercially available; for example, product name: Disflmoll TOF (Tg= -105°C) provided by Lanxess co., ltd.

According to an embodiment of the invention, the plasticizing agent further comprises a plasticizer selected from the group consisting of the non-polar liquid plasticizer(s), hydrocarbon resin(s) and the mixtures thereof.

According to a more embodiment of the invention, the plasticizing agent further comprises non-polar liquid plasticizer(s).

According to another more embodiment of the invention, the plasticizing agent further comprises hydrocarbon resin(s).

In a manner known to a person skilled in the art, the designation "resin" is reserved in the present application, by definition, for a compound which is solid at ambient temperature (20°C under atmosphere pressure), in contrast to a liquid plasticizing compound, that is, a liquid plasticizer, such as an oil.

Hydrocarbon resin(s) are polymers well known to those skilled in the art, essentially based on carbon and hydrogen but which may comprise other types of atoms, which can be used in particular as plasticizer or tackifiers in polymeric matrices. They are by nature miscible (i.e., compatible) in the contents used with the polymer compositions for which they are intended, so as to act as true diluents. They have been described for example in the work entitled "Hydrocarbon Resins" by R. Mildenberg, M. Zander and G. Collin (New York, VCH, 1997, ISBN 3-527-28617-9), Chapter 5 of which is devoted to their applications, especially in rubber tyres (5.5. "Rubber Tires and Mechanical Goods"). They may be aliphatic, cycloaliphatic, aromatic, hydrogenated aromatic, of the aliphatic/aromatic type, i.e., based on aliphatic and/ or aromatic monomers. They may be natural or synthetic resins, whether or not based on petroleum (if such is the case, they are also known as petroleum resins). Their Tg is preferably above 0°C, in particular above 20°C (usually between 30°C and 95°C).

In a known manner, these hydrocarbon resins may also be termed thermoplastic resins in the sense that they soften when heated and may thus be molded. They may also be defined by a softening point or temperature. The softening point of a hydrocarbon resin is generally about 50°C to 60°C higher than its Tg value. The softening point is measured according to standard ISO 4625 (ring-and-ball method). The macrostructure (Mw, Mn and Ip) is determined by size exclusion chromatography (SEC).

A Moore calibration is carried out with a series of commercial polystyrene standards having a low Ip (less than 1.2), with known molar masses, covering the range of masses to be analyzed. The weight-average molar mass (Mw), the number-average molar mass (Mn) and the polydispersity index (Ip:Mw/Mn) are deduced from the data recorded (curve of distribution by mass of the molar masses).

All the values for molar masses shown in the present application are thus relative to calibration curves produced with polystyrene standards.

As examples of such hydrocarbon resin(s), mention may be made of those chosen from the group consisting of cyclopentadiene (abbreviated to CPD) homopolymer or copolymer resins, dicyclopentadiene (abbreviated to DCPD) homopolymer or copolymer resins, terpene homopolymer or copolymer resins, C₅ fraction homopolymer or copolymer resins, C₉ fraction homopolymer or copolymer resins, alphamethyl styrene homopolymer or copolymer resins and the mixtures thereof. Use is more preferably made, among the above copolymer resins, of those chosen from the group consisting of (D)CPD/vinylaromatic copolymer resins, (D)CPD/terpene copolymer resins, (D)CPD/C5 fraction copolymer resins, (D)CPD/C₉ fraction copolymer resins, terpene/vinylaromatic copolymer resins, terpene/phenol copolymer resins, C₅ fraction/vinyl-aromatic copolymer resins, C₉ fraction/vinylaromatic copolymer resins, and the mixtures thereof.

The term "terpene" combines here, in a known way, the α-pinene, β-pinene and limonene monomers; use is preferably made of a limonene monomer, which compound exists, in a known way, in the form of three possible isomers: L-limonene (laevorotatory enantiomer), D-limonene (dextrorotatory enantiomer) or else dipentene, the racemate of the dextrorotatory and laevorotatory enantiomers. Styrene, α-methylstyrene, ortho-, meta- or para-methylstyrene, vinyltoluene, para-(tert-butyl)styrene, methoxystyrenes, chlorostyrenes, hydroxystyrenes vinylmesitylene, divinylbenzene, vinylnaphthalene, or any vinylaromatic monomer resulting from a C₉ fraction (or more generally from a C₈ to C₁₀ fraction) are suitable, for example, as vinylaromatic monomer. Preferably, the vinylaromatic compound is styrene or a vinylaromatic monomer resulting from a C₉ fraction (or more generally from a C₈ to C₁₀ fraction). Preferably, the vinylaromatic compound is the minor monomer, expressed as molar fraction, in the copolymer under consideration.

More particularly, mention may be made of resins selected from the group consisting of (D)CPD homopolymer resins, (D)CPD/ styrene copolymer resins, polylimonene resins, limonene/ styrene copolymer resins, limonene/D(CPD) copolymer resins, C₅ fraction/styrene copolymer resins, C₅ fraction /C₉ fraction copolymer resins and blends of these resins.

All the above resins are well known to those skilled in the art and are commercially available, for example sold by DRT under the name "Dercolyte" as regards polylimonene resins, sold by Neville Chemical Company under the name"Super Nevtac", by Kolon under the name "Hikorez" or by Exxon Mobil under the name "Escorez" as regards C₅ fraction /styrene resins or C₅ fraction/C₉ fraction resins, or else by Struktol under the name "40 MS" or "40 NS" (blends of aromatic and/or aliphatic resins).

The rubber composition of the tread of the tire according to the invention has an essential feature of being based on a diacetal represented by the above formula (I), wherein R¹ and R² are the same or different and each represent a hydrogen atom, a C₁ to C₄ alkyl group, a C₁ to C₄ alkoxy group, a C₁ to C₄ alkoxycarbonyl group or a halogen atom; a and b are each an integer of 1 to 5; c is 0 or 1; when a is 2, the two R¹ groups taken together with the benzene ring to which they are linked may form a tetralin ring; and when b is 2, the two R² groups taken together with the benzene ring to which they are linked may form a tetralin ring.

Preferably, the amount of diacetal is between 0.1 and 5 phr. Below the indicated minimum, there is a risk of the targeted technical effect being inadequate, whereas, above the recommended maximum, the costs increase and the risk to deteriorate certain mechanical properties of the rubber composition(s), in the initial state and after ageing. For these reasons, the content of the diacetal is preferably between 0.3 and 3 phr, more preferably between 0.5 and 1 phr.

According to a preferred embodiment of the invention, the diacetal is selected from the group consisting of 1,3:2,4-O-dibenzylidene-D-sorbitol, 1,3:2,4-bis-O-(p-methylbenzylidene)-D-sorbitol, 1,3:2,4-bis-O-(p-ethylbenzylidene)-D-sorbitol and 1,3:2,4-bis-O-(3,4-dimethylbenzylidene)-D-sorbitol and the mixtures thereof, more particularly 1,3:2,4-O-dibenzylidene-D-sorbitol. The diacetal is commercially available; for example, product name: GEL ALL D (1,3:2,4-bis-O-benzylidene-D-glucitol (dibenzylidene sorbitol)), GEL ALL MD, GEL ALL MD-LM30G, GEL ALL E-200 and RiKAFAST PI (1,3:2,4-bis-O-(4-methylbenzylidene)-D-sorbitol) provided by New Japan Chemical co., ltd.

According to a more preferred embodiment of the invention, the rubber composition is based on a gel of the polar liquid plasticizer with the diacetal, that is, the rubber composition is based on the polar liquid plasticizer which forms the plasticizing agent and is gelated with the diacetal. Particularly, the gel which comprises the polar liquid plasticizer and the diacetal, that is, the polar liquid plasticizer gelated with the diacetal, comprises between 0.5 and 5.0 parts, more particularly between 1.0 and 4.0 parts, still more particularly between 1.5 and 3.5 parts, by weight of the diacetal per 100 parts by weight of the polar liquid plasticizer forming the gel. Advantageously, the gel is obtained, that is, the polar liquid plasticizer is gelated with the diacetal, by a process comprising at least the steps of: incorporating in the polar liquid plasticizer, into a mixer, the diacetal at a temperature of less than 60°C (in particular, between 0°C and 60°C), preferably less than 40°C (in particular, between 0°C and 40°C), more preferably a room temperature (about 20°C); heating and stirring the combined mixture at a temperature of more than 100°C (in particular, between 100°C and 140°C, preferably more than 110°C (in particular, between 110°C and 130°C); and cooling the combine mixture at a temperature of less than 90°C (in particular, between 70°C and 90°C), preferably less than 85°C (in particular, between 75°C and 85°C).

The rubber compositions of the treads of the tires according to the invention may be also based on all or portion(s) of the usual additives generally used in the elastomer compositions intended for the manufacture of treads for tires, in particular for snow tires or winter tires, such as, for example, protection agents, such as antiozone waxes, chemical antiozonants, antioxidants, reinforcing resins, methylene acceptors (for example phenolic novolak resin) or methylene donors (for example HMT or H3M), a crosslinking system based either on sulphur or on donors of sulphur and/or per oxide and/or bismaleimides, vulcanization accelerators, or vulcanization activators.

According to a preferred embodiment of the invention, the rubber composition of the tread of the tire is further based on between 0.2 and 10 phr, preferably between 0.3 and 6 phr, more preferably within a range from 0.5 to 4 phr, still more preferably within a range from 3 to 4 phr, of a metal acetylacetonate. Particularly, the metal acetylacetonate is in the form of microparticles understood to mean, by definition and in general, particles of micrometric size, that is to say for which a median size by volume corresponding to 50 (volume) % of a cumulative distribution from a volume particle size distribution of the microparticles is between 1µm and 1 mm, more particularly between 2µm and 800µm, furthermore particularly between 2µm and 500µm, still furthermore particularly within a range from 5µm to 200µm, which is measured by laser diffraction methods in accordance with ISO standard 13320-1. Specially, the metal of the metal acetylacetonate, is selected from the group consisting of alkali metal(s), alkaline earth metal(s), rare earth metal(s), transition metal(s) and the mixtures thereof, more specially selected from the alkali metal(s), the alkaline earth metal(s) and the mixtures thereof, still more specially selected from the group consisting of lithium, sodium, potassium, calcium, magnesium and the mixtures thereof, furthermore specially magnesium, or calcium, still furthermore specially magnesium. Of course, in the present description, the term "acetylacetonate" can denote both a single acetylacetonate compound or a mixture(s) of several acetylacetonate compounds. The acetylacetonates described above are well known and until now have been used mainly as catalyst for the polymerization of polymers (see, for example, WO 95/03348, WO96/03455, U.S. Pat. No. 3803053, U.S. Pat. No. 5484897, U.S. Pat. No. 5858903, U.S. Pat. No. 5914377, U.S. Pat. No. 6800705, U.S. Pat. No. 3247175, U.S. Pat. No. 3313796, FR 2087786 or GB 1338133).

The rubber compositions of the treads of the tires according to the invention are manufactured in appropriate mixers using two successive preparation phases according to a general procedure well known to a person skilled in the art: a first phase of thermomechanical working or kneading (referred to as "non-productive" phase) at high temperature, up to a maximum temperature of between 110°C and 190°C, preferably between 130°C and 180°C, followed by a second phase of mechanical working (referred to as "productive" phase) at a lower temperature, typically of less than 110°C, for example between 40°C and 100°C, finishing phase during which the crosslinking or vulcanization system is incorporated.

A process which can be used for the manufacture of such compositions comprises, for example and preferably, the following steps:
[0109][0102] incorporating in the diene elastomer(s), in a mixer, the reinforcing filler, the plasticizing agent, the diacetal during a first stage ("non productive" stage) everything being kneaded thermomechanically, in one or more goes, until a maximum temperature of between 110°C and 190°C is reached;
- cooling the combined mixture to a temperature of less than 100°C;
- subsequently incorporating, during a second stage ("productive" stage), a crosslinking system;
- kneading everything up to a maximum temperature of less than 110°C;
- extruding or calendering the rubber composition thus obtained, in particular in the form of a tire tread.

By way of example, the first (non-productive) phase is carried out in a single thermomechanical stage during which all the necessary constituents are introduced into an appropriate mixer, such as a standard internal mixer, followed, in a second step, for example after kneading for 1 to 2 minutes, by the other additives, optional additional filler-covering agents or processing aids, with the exception of the crosslinking system. The total kneading time, in this non-productive phase, is preferably between 1 and 15 min.

After cooling the mixture thus obtained, the crosslinking system is then incorporated at low temperature (for example, between 40°C and 100°C), generally in an external mixer, such as an open mill; The combined mixture is then mixed (the second (productive) phase) for a few minutes, for example between 2 and 15 min.

The crosslinking system is preferably based on sulphur and on a primary vulcanization accelerator, in particular on an accelerator of sulphenamide type. Added to this vulcanization system are various known secondary accelerators or vulcanization activators, such as zinc oxide, stearic acid, guanidine derivatives (in particular diphenylguanidine), and the like, incorporated during the first non-productive phase and/or during the productive phase. The content of sulphur is preferably between 0.5 and 3.0 phr, and that of the primary accelerator is preferably between 0.5 and 5.0 phr.

Use may be made, as accelerator (primary or secondary) of any compound capable of acting as accelerator of the vulcanization of diene elastomers in the presence of sulphur, in particular accelerators of the thiazoles type and their derivatives, accelerators of thiurams types, or zinc dithiocarbamates. These accelerators are more preferably selected from the group consisting of 2-mercaptobenzothiazyl disulphide (abbreviated to "MBTS"), N-cyclohexyl-2-benzothiazole sulphenamide (abbreviated to "CBS"), N,N-dicyclohexyl-2 benzothiazolesulphenamide ("DCBS"), N-ter't-butyl-2-ben zothiazolesulphenamide ("TBBS"), N-tert-butyl-2 benzothiazole-sulphenimide ("TBSI"), zinc dibenzyldithiocarbamate ("ZBEC"), Tetrabenzylthiuram disulfide ("TBZTD") and the mixtures thereof.

The composition thus obtained is subsequently calendered, for example in the form of a sheet or of a plaque, in particular for laboratory characterization, or else extruded in the form of a rubber profiled element which can be used directly as snow tire tread or winter tire tread.

The vulcanization (or curing) is carried out in a known way at a temperature generally of between 110°C and 190°C for a sufficient time which can vary, for example, between 5 and 90 min depending in particular on the curing temperature, the vulcanization system adopted and the vulcanization kinetics of the composition under consideration.

The rubber compositions of the treads of the tires according to the invention can constitute all or a portion only of the tread in accordance with the invention, in the case of a tread of composite type formed from several rubber compositions of different formulations.

The invention relates to the rubber compositions and to the treads described above, both in the raw state (i.e., before curing) and in the cured state (i.e., after crosslinking or vulcanization).

The invention also applies to the cases where the rubber compositions described above form only one part of treads of composite or hybrid type, especially those consisting of two radially superposed layers of different formulations (referred to as "cap-base" construction), that are both patterned and intended to come into contact with the road when the tire is rolling, during the service life of the latter. The base part of the formulation described above could then constitute the radially outer layer of the tread intended to come into contact with the ground from the moment when a new tire starts rolling, or on the other hand its radially inner layer intended to come into contact with the ground at a later stage.

The invention is further illustrated by the following examples.

### Examples

In the test, four compositions (identified as C-1, C-2, C-3, and C-4) based on a diene elastomer (BR/SBR) are compared, the four compositions are reinforced with a blend of silica and carbon black with a diacetal and a varying plasticizing agent. The formulations of the four compositions are given at Table 1 with the content of the various products expressed in phr.
- Composition C-1: a composition with MES oils gelated with the diacetal (a reference);
- Composition C-2: a composition according to the present invention with oleic sunflower oils gelated with the diacetal;
- Composition C-3: a composition according to the present invention with tris(2-ethylhexyl)phosphate gelated with the diacetal;
- Composition C-4: a composition according to the present invention with tris(2-ethylhexyl)phosphate and the diacetal, the polar liquid plasticizer not gelated with the diacetal.

The diacetal, the plasticizing agent (hydrocarbon resins and the polar or non-polar liquid plasticizers optionally beforehand gelated with the diacetal), the reinforcing filler (a carbon black, a reinforcing inorganic filler, such as silica, and its associated coupling agent), the diene elastomer(s) and the various other ingredients, with the exception of the vulcanization system, were successively introduced into an internal mixer having an initial vessel temperature of approximately 60°C; the mixer was thus approximately 70% full (% by volume). Thermomechanical working (non-productive phase) was then carried out in one stage, which lasts in total approximately 3 to 4 minutes, until a maximum "dropping" temperature of 165°C was reached. The mixture thus obtained was recovered and cooled and then sulphur and an accelerator of sulphenamide type were incorporated on an external mixer (homofinisher) at 30°C, everything being mixed (productive phase) for an appropriate time (for example between 5 and 12 min).

The compositions thus obtained were subsequently calendered, either in the form of sheets (thickness of 2 to 3 mm) or of fine sheets of rubber, for the measurement of their physical or mechanical properties, or in the form of profiled elements which could be used directly, after cutting and/or assembling to the desired dimensions, for example as tire semi-finished products, in particular as tire treads.

In each of the rubber compositions C-1 to C-3, each of the liquid plasticizers was gelated with the diacetal, which was obtained as the following steps: the liquid plasticizers (MES oils, oleic sunflower oils or tris(2-ethylhexyl)phosphate) and the diacetal (GEL ALL D) were introduced into a mixer at a room temperature which was approximately 20°C; the combined mixture was heated and stirred at a temperature of approximately 120°C; and then, the combined mixture was cooled from a temperature of approximately 80°C to the room temperature.

The rate of crack propagation, exhibiting the cracking resistance, was measured on test specimens of the rubber compositions C-1 to C-4, with the aid of a cyclic fatigue machine ("Elastomer Test System") of the 381 type from MTS, as explained hereinafter.

The cracking resistance was measured with the aid of repeated tensile actions on a test specimen which was initially accommodated (after a first tensile cycle), then notched. The tensile test specimen consisted of a rubber plaque of parallelepipedal shape, for example with a thickness of between 1 and 2 mm, a length of between 130 and 170 mm and a width of between 10 and 15 mm, with the two lateral edges each being covered lengthwise with a cylindrical rubber bead (diameter 5 mm) enabling the specimen to be anchored in the jaws of the tensile testing device. The test was conducted under air, at a temperature of 108°C. After accommodation, three very narrow notches of between 15 and 20 mm in length were made with the aid of a razor blade, at mid-width and aligned in the lengthwise direction of the test specimen, with one at each end and one at the center of the latter, before starting the test. With each tensile cycle, the degree of deformation of the test specimen was automatically adjusted so as to hold the energy restitution level (the amount of energy released during crack progression) constant at a value equal to 800 J/m2. The rate of crack propagation, that is, the crack propagation speeds was obtained by dividing a length of crack propagated by the deformation with a number of cycles of the deformation.

The results are expressed in Table 2. A value above that of the reference (composition C-1), arbitrarily set at 100, indicates an improved result, that is to say an aptitude for better resistance to crack propagation. It is observed in this Table 2 that each of the compositions C-2 to C-4 according to the invention has a remarkable increase (10 to 300, respectively) relative to the composition C-1 (the reference).

In conclusion, the results of the tests commented above show that the specific rubber composition of the tread of the tire according to the present invention gives the tires and their treads a better and improved resistance to crack propagation.

**[Table 1]**

| Rubber Composition No.: | Ref. | Examples of the invention | | |
|---|---|---|---|---|
| | C-1 | C-2 | C-3 | C-4 |
| BR (1) | 40 | 40 | 40 | 40 |
| SBR (2) | 60 | 60 | 60 | 60 |
| Silica (3) | 80 | 80 | 80 | 80 |
| Coupling agent (4) | 6.4 | 6.4 | 6.4 | 6.4 |
| Carbon black (5) | 5 | 5 | 5 | 5 |
| Non-polar liquid plasticizer gelated with a diacetal (6) | 28.8 | | | |
| Polar liquid plasticizer gelated with a diacetal (7) | | 28.8 | | |
| Polar liquid plasticizer gelated with a diacetal (8) | | | 28.8 | |
| Polar liquid plasticizer (9) | | | | 28 |
| Diacetal (10) | | | | 0.8 |
| Hydrocarbon resin (11) | 34 | 34 | 34 | 34 |
| Metal acetylacetonate (12) | 3.6 | 3.6 | 3.6 | 3.6 |
| DPG(13) | 2 | 2 | 2 | 2 |
| ZnO | 1.3 | 1.3 | 1.3 | 1.3 |
| Stearic acid | 1 | 1 | 1 | 1 |
| Antiozone wax | 1.5 | 1.5 | 1.5 | 1.5 |
| Antioxidant (14) | 2 | 2 | 2 | 2 |
| Sulphur | 2 | 2 | 2 | 2 |
| Accelerator (15) | 1.7 | 1.7 | 1.7 | 1.7 |

| | | | | |
|---|---|---|---|---|
| (1) BR with 0.3% of 1,2 vinyl; 2.7% of trans; 97% of cis-1,4 (Tg = -104°C); (2) SBR with 27% of styrene units, with 24% of 1,2-units for butadiene parts (Tg= - 48°C); (3) Silica "Zeosi11165MP" from Rhodia, " (CTAB, BET: about 160 m²/g); (4) Coupling agent TESPT ("Si69" from Evonik); (5) Grade ASTM N234 (Cabot); (6) MES oil ("Catenex SNR" from Shell: 28 phr) gelated with diacetal ("GEL ALL D", from New Japan Chemical Co., Ltd.: 0.8 phr); (7) Oleic sunflower oil ("Agripure 80" from Cargill, Weight percent oleic acid: 100%) gelated with diacetal ("GEL ALL D", from New Japan Chemical Co., Ltd.: 0.8 phr); (8) Tris(2-ethylhexyl)phosphate ("Disflamoll TOF", from LANXESS Company (Tg= 105°C): 28 phr) gelated with diacetal ("GEL ALL D", from New Japan Chemical Co., Ltd.: 0.8 phr); (9) Tris(2-ethylhexyl)phosphate ("Disflamoll TOF", from LANXESS, Tg= -105°C); (10) Diacetal ("GEL ALL D", from New Japan Chemical); (11) Hydrocarbon resin C₅/C₉ type ("Escorez ECR-373" from Exxon, Tg= 44°C); (12) Magnesium acetylacetonate (Product No. 12532, from Alfa-Aesar, median particle size measured by laser diffraction methods in accordance with ISO standard 13320-1: 100µm); (13) Diphenylguanidine ("Perkacit DPG" from Flexsys); (14) N-(1,3-dimethylbutyl)-N-phenyl-para-phenylenediamine ("Santoflex 6-PPD" from Flexsys); (15) N-dicyclohexyl-2-benzothiazolesulphenamide ("Santocure CBS" from Flexsys). | | | | |

**[Table 2]**

| Rubber Composition No.: | Ref. | Examples of the invention | | |
|---|---|---|---|---|
| | C-1 | C-2 | C-3 | C-4 |
| Rate of crack propagation (16) | 100 | 150 | 400 | 110 |

| | | | | |
|---|---|---|---|---|
| (16) Rate of crack propagation (C-1)/ Rate of crack propagation (C-n) ×100; wherein: n=1,2,3 and 4. | | | | |

## Claims

1. A tire having a tread that comprises a rubber composition based on at least a diene elastomer, a reinforcing filler, a plasticizing agent comprising a polar liquid plasticizer, and a diacetal represented by the formula (I): 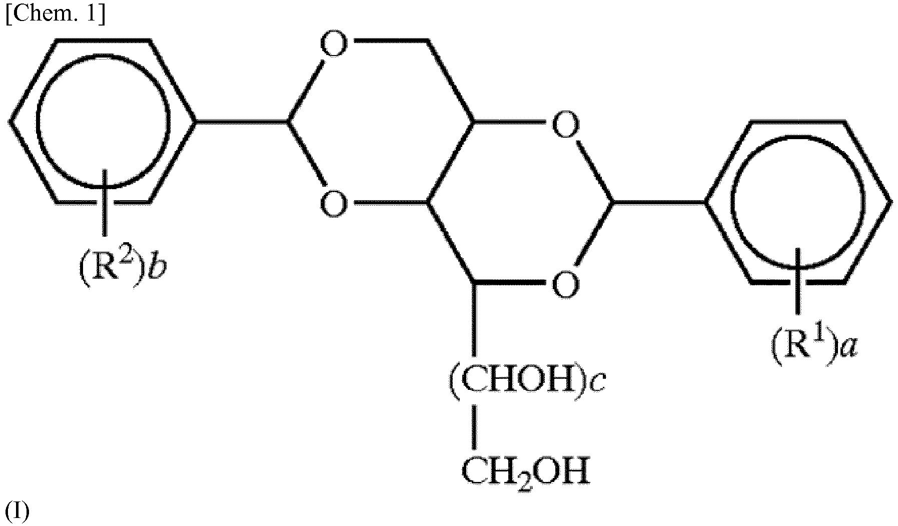 wherein R¹ and R² are the same or different and each represent a hydrogen atom, a C₁ to C₄ alkyl group, a C₁ to C₄ alkoxy group, a C₁ to C₄ alkoxycarbonyl group or a halogen atom; a and b are each an integer of 1 to 5; c is 0 or 1; when a is 2, the two R¹ groups taken together with the benzene ring to which they are linked may form a tetralin ring; and when b is 2, the two R² groups taken together with the benzene ring to which they are linked may form a tetralin ring.

2. The tire according to Claim 1, wherein the diene elastomer is selected from the group consisting of natural rubber, synthetic polyisoprenes, polybutadienes, butadiene copolymers, isoprene copolymers and the mixtures thereof.

3. The tire according to Claim 1 or Claim 2, wherein the polar liquid plasticizer is selected from the group consisting of vegetable oil(s), ether plasticizer(s), ester plasticizer(s), phosphate plasticizer(s), sulphonate plasticizer(s) and the mixtures thereof, preferably selected from the group consisting of vegetable oil(s), phosphate plasticizer(s) and the mixtures thereof.

4. The tire according to Claim 3, wherein the polar liquid plasticizer is selected from the group consisting of phosphate plasticizer(s) and the mixtures thereof, preferably is Tris(2-ethylhexyl)phosphate.

5. The tire according to any one of Claims 1 to 4, wherein the diacetal is selected from the group consisting of 1,3:2,4-O-dibenzylidene-D-sorbitol, 1,3:2,4-bis-O-(p-methylbenzylidene)-D-sorbitol, 1,3:2,4-bis-O-(p-ethylbenzylidene)-D-sorbitol and 1,3:2,4-bis-O-(3,4-dimethylbenzylidene)-D-sorbitol and the mixtures thereof, preferably is 1,3:2,4-O-dibenzylidene-D-sorbitol.

6. The tire according to any one of Claims 1 to 5, wherein the rubber composition is based on a gel of the polar liquid plasticizer with the diacetal.

7. The tire according to Claim 6, wherein the gel comprises between 0.5 and 5.0 parts by weight of the diacetal per 100 parts by weight of the polar liquid plasticizer forming the gel.

8. The tire according to Claim 6 or Claim 7, wherein the gel is obtained by a process comprising at least the steps of:
- incorporating in the polar liquid plasticizer, into a mixer, the diacetal at a room temperature of less than 60°C;
- heating and stirring the combined mixture at a temperature of more than 100°C; and
- cooling the combine mixture at a temperature of less than 90°C.

9. The tire according to any one of Claims 1 to 8, wherein the rubber composition is based on the polar liquid plasticizer gelated with the diacetal.

10. The tire according to any one of Claims 1 to 9, wherein the reinforcing filler comprises more than 70 phr of the reinforcing inorganic filler, preferably the reinforcing inorganic filler comprising more than 50% and up to 100% of silica by weight of the reinforcing inorganic filler.

11. The tire according to any one of Claims 1 to 10, wherein the reinforcing filler comprises less than 20 phr of carbon black.

12. The tire according to any one of Claims 1 to 11, wherein the rubber composition is based on between 50 and 100 phr of the plasticizing agent.

13. The tire according to any one of Claims 1 to 12, wherein the plasticizing agent further comprises a plasticizer selected from the group consisting of non-polar liquid plasticizer(s), hydrocarbon resin(s) and the mixtures thereof.

14. The tire according to any one of Claims 1 to 13, wherein the rubber composition is further based on between 0.2 and 10 phr of a metal acetylacetonate.

15. A rubber composition based on at least a diene elastomer, a reinforcing filler, a plasticizing agent comprising a polar liquid plasticizer, and a diacetal represented by the formula (I).

## Patentansprüche

1. Reifen mit einer Lauffläche, die eine Gummizusammensetzung basierend auf wenigstens einem Dien-Elastomer, einem verstärkenden Füllstoff, einem Weichmacher, umfassend einen polaren, flüssigen Weichmacher und ein Diactel umfasst, das durch Formel (I) dargestellt ist: 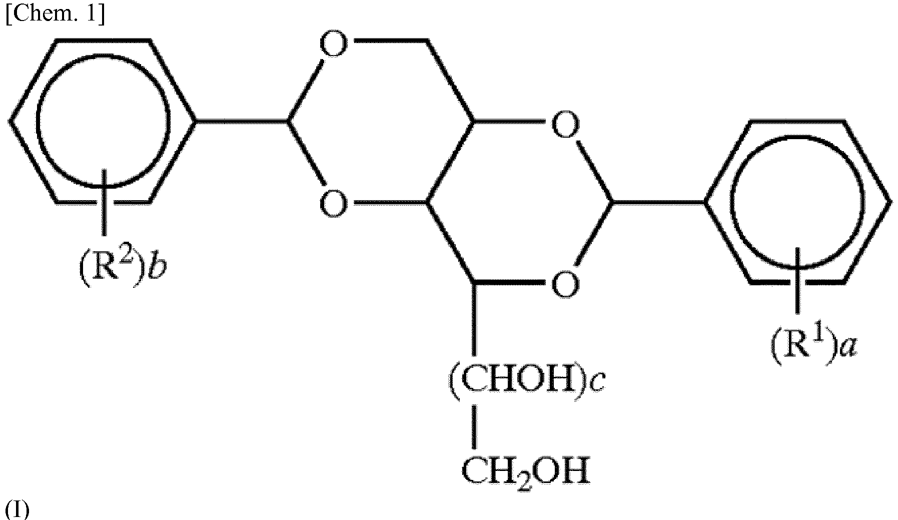 wobei R¹ und R² dieselben oder unterschiedlich sind und jedes ein Wasserstoffatom, eine Ci- bis C₄-Alkylgruppe, eine Ci- bis C₄-Alkoxygruppe, eine Ci- bis C₄-Alkoxycarbonylgruppe oder ein Halogenatom darstellt; a und b jeweils eine ganze Zahl von 1 bis 5 sind; c 0 oder 1 ist; wenn a 2 ist, können die zwei R¹-Gruppen zusammen mit dem Benzolring, mit dem sie verbunden sind, einen Tetralinring bilden; und wenn b 2 ist, können die zwei R²-Gruppen zusammen mit dem Benzolring, mit dem sie verbunden sind, einen Tetralinring bilden.

2. Reifen gemäß Anspruch 1, wobei das Dien-Elastomer aus der Gruppe ausgewählt ist, bestehend aus natürlichem Gummi, synthetischen Polyisoprenen, Polybutadienen, Butadien-Kopolymeren, Isopren-Kopolymeren und den Mischungen davon.

3. Reifen gemäß Anspruch 1 oder Anspruch 2, wobei der polare flüssige Weichmacher aus der Gruppe ausgewählt ist, bestehend aus Pflanzenöl(en), Ester-Weichmacher(n), Phosphat-Weichmacher(n), Sulfonat-Weichmacher(n) und den Mischungen davon, bevorzugt aus der Gruppe ausgewählt ist, bestehend aus Pflanzenöl(en), Phosphat-Weichmacher(n) und den Mischungen davon.

4. Reifen gemäß Anspruch 3, wobei der polare flüssige Weichmacher aus der Gruppe ausgewählt ist, bestehend aus Phosphat-Weichmacher(n) und den Mischungen davon, bevorzugt Tris(2-Ethylhexyl)-Phosphat ist.

5. Reifen gemäß irgendeinem der Ansprüche 1 bis 4, wobei das Diacetal aus der Gruppe ausgewählt ist bestehend aus 1,3:2,4-O-Dibenzyliden-D-Sorbitol, 1,3:2,4-bis-O-(p-Methylbenzyliden)-D-Sorbitol, 1,3:2,4-bis-0-(p-Ethylbenzyliden)-D-Sorbitol und 1,3:2,4-bis-O-(3,4-Dimethylbenzyliden)-D-Sorbitol und den Mischungen davon, bevorzugt 1,3:2,4-O-Dibenzyliden-D-Sorbitol ist.

6. Reifen gemäß irgendeinem der Ansprüche 1 bis 5, wobei die Gummizusammensetzung auf einem Gel aus dem polaren flüssigen Weichmacher mit dem Diacetal basiert.

7. Reifen gemäß Anspruch 6, wobei das Gel zwischen 0,5 und 5,0 Gewichtsanteile des Diacetals auf 100 Gewichtsanteile des polaren flüssigen Weichmachers umfasst, der das Gel bildet.

8. Reifen gemäß Anspruch 6 oder Anspruch 7, wobei das Gel durch einen Prozess erhalten ist, der wenigstens die Schritte umfasst:
- Einfügen des Diacetals in den polaren flüssigen Weichmacher in einem Mischer bei einer Raumtemperatur von weniger als 60° C;
- Erwärmen und Rühren der kombinierten Mischung bei einer Temperatur von mehr als 100° C; und
- Abkühlen der kombinierten Mischung bei einer Temperatur von weniger als 90° C.

9. Reifen gemäß irgendeinem der Ansprüche 1 bis 8, wobei die Gummizusammensetzung auf dem polaren flüssigen Weichmacher basiert, der mit dem Diacetal geliert ist.

10. Reifen gemäß irgendeinem der Ansprüche 1 bis 9, wobei der verstärkende Füllstoff mehr als 70 phr des anorganischen verstärkenden Füllstoffs umfasst, wobei der anorganische verstärkende Füllstoff bevorzugt mehr als 50 Gew.-% und bis zu 100 Gew.-% Silizium des anorganischen verstärkenden Füllstoffs umfasst.

11. Reifen gemäß irgendeinem der Ansprüche 1 bis 10, wobei der verstärkende Füllstoff weniger als 20 phr Kohlenschwarz umfasst.

12. Reifen gemäß irgendeinem der Ansprüche 1 bis 11, wobei die Gummizusammensetzung auf 50 bis 100 phr des polaren flüssigen Weichmachers basiert.

13. Reifen gemäß irgendeinem der Ansprüche 1 bis 12, wobei der Weichmacher weiterhin einen Weichmacher umfasst, der aus der Gruppe ausgewählt ist, bestehend aus nichtpolarem, flüssigen Weichmacher(n), Wasserstoff-Harz(en) und den Mischungen davon.

14. Reifen gemäß irgendeinem der Ansprüche 1 bis 13, wobei die Gummizusammensetzung weiterhin auf 0,2 bis 10 phr eines Metall-Acetylacetonats basiert.

15. Gummizusammensetzung basierend auf wenigstens einem Dien-Elastomer, einem verstärkenden Füllstoff, einem Weichmacher, umfassend einen polaren, flüssigen Weichmacher und ein Diactel umfasst, das durch Formel (I) dargestellt ist:

## Revendications

1. Pneu ayant une bande de roulement qui comprend une composition caoutchouteuse à base d'au moins un élastomère diénique, une charge renforçante, un agent plastifiant comprenant un plastifiant liquide polaire et un diacétal représenté par la formule (I) : 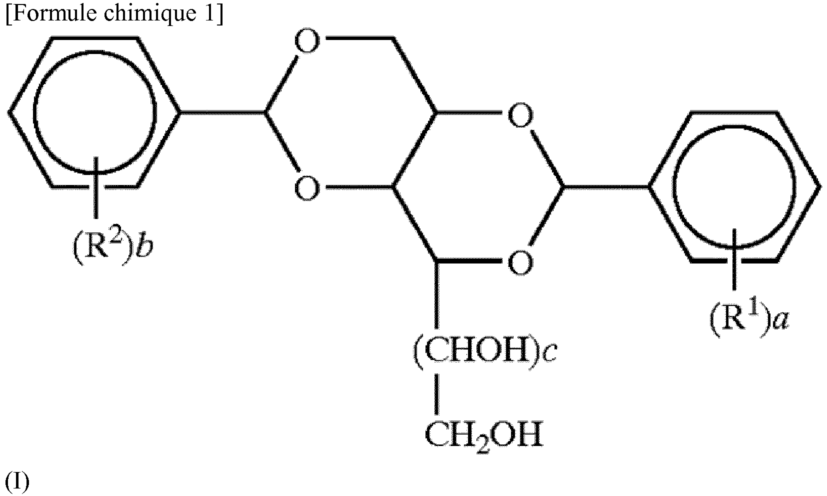 dans laquelle R¹ et R² sont identiques ou différents et chacun représente un atome d'hydrogène, un groupe alkyle en C₁-C₄, un groupe alcoxy en C₁-C₄, un groupe alcoxycarbonyle en C₁-C₄ ou un atome d'halogène ; a et b sont chacun un entier de 1 à 5 ; c vaut 0 ou 1 ; lorsque a vaut 2, les deux groupes R¹ pris conjointement avec le cycle benzénique auquel ils sont liés peuvent former un cycle tétralinique ; et lorsque b vaut 2, les deux groupes R² pris conjointement avec le cycle benzénique auquel ils sont liés peuvent former un cycle tétralinique.

2. Pneu selon la revendication 1, dans lequel l'élastomère diénique est choisi dans le groupe constitué de caoutchouc naturel, de polyisoprènes synthétiques, de polybutadiènes, de copolymères de butadiène, de copolymères d'isoprène et de mélanges de ceux-ci.

3. Pneu selon la revendication 1 ou la revendication 2, dans lequel le plastifiant liquide polaire est choisi dans le groupe constitué d'huile(s) végétale(s), de plastifiant(s) à base d'éthers, de plastifiant(s) à base d'esters, de plastifiant(s) à base de phosphates, de plastifiant(s) à base de sulfonates et de mélanges de ceux-ci, de préférence choisis dans le groupe constitué d'huile(s) végétale(s), de plastifiant(s) à base de phosphates et de mélanges de ceux-ci.

4. Pneu selon la revendication 3, dans lequel le plastifiant liquide polaire est choisi dans le groupe constitué de plastifiant(s) à base de phosphates et de mélanges de ceux-ci, et qui est de préférence le tris(2-éthylhexyl)phosphate.

5. Pneu selon l'une quelconque des revendications 1 à 4, dans lequel le diacétal est choisi dans le groupe constitué du 1,3:2,4-O-dibenzylidène-D-sorbitol, du 1,3:2,4-bis-O-(p-méthylbenzylidène)-D-sorbitol, du 1,3:2,4-bis-O-(p-éthylbenzylidène)-D-sorbitol et du 1,3:2,4-bis-O-(3,4-diméthylbenzylidène)-D-sorbitol et de mélanges de ceux-ci, et qui est de préférence le 1,3:2,4-O-dibenzylidène-D-sorbitol.

6. Pneu selon l'une quelconque des revendications 1 à 5, dans lequel la composition caoutchouteuse est à base d'un gel du plastifiant liquide polaire avec le diacétal.

7. Pneu selon la revendication 6, dans lequel le gel comprend entre 0,5 et 5,0 parties en poids de diacétal pour 100 parties en poids du plastifiant liquide polaire formant le gel.

8. Pneu selon la revendication 6 ou la revendication 7, dans lequel le gel est obtenu par un processus comprenant les étapes consistant à :
- incorporer dans le plastifiant liquide polaire, dans un mélangeur, le diacétal à une température ambiante inférieure à 60 °C ;
- chauffer et agiter le mélange combiné à une température supérieure à 100 °C ; et
- refroidir le mélange combiné à une température inférieure à 90 °C.

9. Pneu selon l'une quelconque des revendications 1 à 8, dans lequel la composition caoutchouteuse est à base de plastifiant liquide polaire gélifié avec le diacétal.

10. Pneu selon l'une quelconque des revendications 1 à 9, dans lequel la charge renforçante comprend plus de 70 pce de charge inorganique renforçante, la charge inorganique renforçante comprenant de préférence plus de 50 % et jusqu'à 100 % de silice en poids de la charge inorganique renforçante.

11. Pneu selon l'une quelconque des revendications 1 à 10, dans lequel la charge renforçante comprend moins de 20 pce de noir de carbone.

12. Pneu selon l'une quelconque des revendications 1 à 11, dans lequel la composition caoutchouteuse est à base d'une quantité comprise entre 50 et 100 pce d'agent plastifiant.

13. Pneu selon l'une quelconque des revendications 1 à 12, dans lequel l'agent plastifiant comprend en outre un plastifiant choisi dans le groupe constitué de plastifiant(s) liquide(s) non polaire(s), de résine(s) d'hydrocarbures et de mélanges de ceux-ci.

14. Pneu selon l'une quelconque des revendications 1 à 13, dans lequel la composition caoutchouteuse est en outre à base d'une quantité comprise entre 0,2 et 10 pce d'acétylacétonate de métal.

15. Composition caoutchouteuse à base d'au moins un élastomère diénique, d'une charge renforçante, d'un agent plastifiant comprenant un plastifiant liquide polaire et d'un diacétal représenté par la formule (I).
